# EUROPÄISCHE PATENTSCHRIFT

(11) **EP 2 334 502 B1**
(45) Veröffentlichungstag und Bekanntmachung des Hinweises auf die Patenterteilung: **20.06.2012**
(21) Anmeldenummer: 09753589.2
(22) Anmeldetag: 14.04.2009
(51) Int. Cl.: B60D 1/54, B60D 1/06

(54) **VERRIEGELUNGSMECHANISMUS SOWIE FAHRZEUGSEITIGE KUPPLUNGSBAUGRUPPE EINER ANHÄNGERKUPPLUNG**
LOCKING MECHANISM, AND COUPLING ASSEMBLY OF A COUPLING DEVICE ON THE VEHICLE SIDE
MÉCANISME DE VERROUILLAGE ET SOUS-ENSEMBLE D ACCOUPLEMENT CÔTÉ VÉHICULE D UN ATTELAGE DE REMORQUE

(30) Priorität: 14.04.2008 DE 102008018739
(43) Veröffentlichungstag der Anmeldung: 22.06.2011
(73) Patentinhaber: TRW Automotive GmbH, 73553 Alfdorf (DE)
(72) Erfinder: ERDOGAN, Cengiz, 47608 Geldern (DE)
(74) Vertreter: Prinz & Partner
(86) Internationale Anmeldenummer: PCT/EP2009/002730
(87) Internationale Veröffentlichungsnummer: WO 2009/143934

(56) Entgegenhaltungen:
- EP-A1- 1 533 149
- DE-A-102007 029 051
- DE-U-202005 014 499

## Beschreibung

Die Erfindung betrifft einen Verriegelungsmechanismus, insbesondere für eine fahrzeugseitige Kupplungsbaugruppe, sowie eine fahrzeugseitige Kupplungsbaugruppe einer Anhängerkupplung für Fahrzeuge, umfassend ein fahrzeugfestes Halteteil und einen Kupplungsarm, der an einem freien Ende ein Kopplungselement zum lösbaren Befestigen eines Anhängers aufweist.

Starre und dauerhaft befestigte, fahrzeugseitige Kupplungsbaugruppen werden insbesondere aufgrund der Ästhetik, aber auch aus Gründen der Fahrzeugsicherheit von wenigen Kundengruppen akzeptiert.

Es gibt daher im Stand der Technik bereits zahlreiche Vorschläge zur Ausbildung abnehmbarer Kupplungsbaugruppen, die jedoch allesamt das Problem haben, dass die jeweiligen Verbindungsstücke verschmutzungs- sowie korrosionsanfällig sind und dass die abnehmbare Kupplungsbaugruppe u.U. nicht ständig mitgeführt wird, also oft im Bedarfsfall nicht verfügbar ist.

Aus dem Stand der Technik sind ferner schwenkbare Kupplungsbaugruppen bekannt, die um eine vorbestimmte, definierte Achse von einer Gebrauchsstellung in eine Nichtgebrauchsstellung verschwenkt werden können und umgekehrt. Die Bewegungsmöglichkeit dieser einachsig schwenkbaren Kupplungsbaugruppen ist dabei begrenzt, so dass die Kupplungsbaugruppe einen unerwünscht großen Bauraum im Heckbereich des Fahrzeugs benötigt.

Um eine größere Bewegungsfreiheit der Kupplungsbaugruppe bereitzustellen, offenbart die DE 10 2004 044 912 A1 eine Kupplungsbaugruppe, die mittels eines Kugelgelenks am Fahrzeug befestigt ist. Dieses Kugelgelenk ermöglicht das Verschwenken eines Kupplungsarms um mehrere Achsen, was die Bauraumanforderungen der Kupplungsbaugruppe reduziert.

Die Verriegelung des Kugelgelenks gemäß DE 10 2004 044 912 A1 in seiner Nichtgebrauchsstellung und/oder Gebrauchsstellung erfolgt durch geführte Verriegelungskugeln. Problematisch ist bei einer solchen Konstruktion das vorhandene Spiel zwischen den Kugeln und deren Führung. Insbesondere in den Verriegelungsstellungen der Kupplungsbaugruppe verursacht dieses Spiel unerwünschte Klappergeräusche sowie erhöhte Verschleißerscheinungen infolge hoher Bauteilbeanspruchung. Ähnliche Probleme mit dem vorhandenen Spiel in den Verriegelungsstellungen der Kupplungsbaugruppe ergeben sich auch bei einer Taumellagerausführung gemäß EP 1 533 149 A1.

Die gattungsgemäße DE 20 2005 014 499 U1 offenbart eine Verriegelungseinrichtung für eine zwischen einer Betriebsstellung und einer Ruhestellung verschwenkbaren Anhängekupplung eines Fahrzeugs. Die Anhängekupplung weist eine Kugelstange auf, die an ihrem dem Fahrzeug abgewandten Ende mit einer Kupplungskugel sowie an ihrem entgegengesetzten Ende mit einer Gelenkkugel versehen ist, wobei die Gelenkkugel gelenkig und unlösbar in einem mit der Fahrzeugkarosserie verschweißten Lagerelement aufgenommen ist. Die Kugelstange ist mittels der Verriegelungseinrichtung zumindest in der Betriebsstellung der Anhängekupplung verriegelbar. Hierzu sind in radialen Kanälen der Gelenkkugel zwei Verriegelungskugeln geführt, die in einer horizontalen Ebene um ca. 90° zueinander versetzt sind. Zum Verriegeln der Kugelstange greift an den Verriegelungskugeln ein Verlagerungselement einer Betätigungsvorrichtung an und drückt die Verriegelungskugeln radial nach außen, so dass sie über die Oberfläche der Gelenkkugel vorstehen. Mit den vorstehenden Abschnitten greifen die Verriegelungskugeln in angepasste Ausnehmungen des Lagerelements ein, wodurch das Kugelgelenk arretiert ist. Auch in diesem Fall ergeben sich aufgrund des Spiels zwischen den Verriegelungskugeln und deren Führung unerwünschte Klappergeräusche sowie erhöhte Verschleißerscheinungen infolge hoher Bauteilbeanspruchung.

Aufgabe der vorliegenden Erfindung ist daher die Schaffung eines vereinfachten Verriegelungsmechanismus, beispielsweise für eine verschwenkbare, fahrzeugseitige Kupplungsbaugruppe, der in einer Verriegelungsstellung weitgehend spielfrei ist.

Erfindungsgemaß wird die Aufgabe durch einen Verriegelungsmechanismus gemäß Anspruch 1 gelöst. Die Erfindung beruht unter anderem auf der Erkenntnis, dass lediglich zwei Verriegelungskörper ausreichen, um das Kugelgelenk im Wesentlichen spielfrei zu arretieren. Infolge der geringeren Anzahl von Verriegelungskörpern sind zur Aufnahme der Verriegelungskörper auch weniger Verriegelungstaschen im Gelenkgehäuse notwendig. Dadurch wird die Fertigung des Verriegelungsmechanismus einfacher und kostengünstiger. Außerdem entsteht durch die entfallenden Verriegelungskörper und Verriegelungstaschen zusätzlicher Bauraum, der für eine größere Dimensionierung der verbleibenden Verriegelungskörper nutzbar ist. Somit kann die auftretende Materialbeanspruchung trotz wegfallender Verriegelungskörper weitgehend konstant gehalten oder sogar verringert werden.

In einer Ausführungsform schließen die Längsrichtungen der beiden Kanäle einen Winkel von 90°<ϕ<180°, besonders bevorzugt einen Winkel von etwa 120° ein. Unter diesen Winkelverhältnissen ergibt sich ein Kräfteverhältnis, das eine zuverlässige spielfreie Verriegelung des Kugelgelenks bei minimaler Materialbeanspruchung ermöglicht.

Die Kanäle liegen vorzugsweise in einer zur Betätigungsrichtung senkrechten Ebene. Bei dieser Konstruktion lässt sich über eine einfache Verschiebung des Betätigungselements in Betätigungsrichtung eine gewünschte gleichmäßige Beaufschlagung der Verriegelungskörper erreichen.

Desweiteren können sich die Kanäle bezüglich des Kugelkopfes in radialer Richtung erstrecken, wodurch in der Verriegelungsstellung des Kugelgelenks unabhängig von der Beanspruchungsrichtung ein weitgehend konstanter Verriegelungswiderstand gegen ein Verschwenken des Kugelgelenks erzielt wird.

In einer bevorzugten Ausführungsform bildet ein Abschnitt der Oberfläche des Kugelkopfes in der Verriegelungsstellung des Kugelgelenks, insbesondere im Bereich der Winkelhalbierenden des Winkels ϕ, den die Kanäle miteinander einschließen, eine Kontaktstelle mit dem Gelenkgehäuse aus. Bei genauer Passung der Verriegelungskörper in ihrem zugeordneten Kanal und ihrer zugeordneten Verriegelungstasche schafft die Kontaktstelle in der Verriegelungsstellung des Kugelgelenks eine stabile und spielfreie 3-Punkt-Abstützung mit einer 2-Punkt-Verriegelung zwischen Kugelkopf und Gelenkgehäuse. Der Verzicht auf weitere Verriegelungspunkte bringt somit Fertigungs- und Kostenvorteile, ohne sich negativ auf die Funktion des Verriegelungsmechanismus, insbesondere die spielfreie Verriegelung des Kugelgelenks, auszuwirken. Durch die Verriegelungskörper wird bei der Gelenkarretierung der Kugelkopf gegen das Gelenkgehäuse gepresst, sodass das radiale Spiel, welches ansonsten zur Verdrehung des Gelenkgehäuses relativ zum Kugelkopf vorhanden ist, entfällt - unabhängig von Toleranzungenauigkeiten.

In jedem Kanal ist erfindungsgemäß ein Zwischenelement vorgesehen, das in Längsrichtung des Kanals geführt ist, wobei das Betätigungselement jeweils über die Zwischenelemente mit den Verriegelungskörpern in Verbindung steht.

In einer weiteren Ausführungsform weist das Betätigungselement eine Längsachse und im Bereich einer Anlagefläche für die Verriegelungskörper oder Zwischenelemente einen bezüglich der Längsachse nicht-rotationssymmetrischen Querschnitt auf, um eine Relativdrehung zwischen dem Betätigungselement und dem G'elenkzapfen um die Längsachse zu verhindern.

Die Zwischenelemente sind erfindungsgemäß elastischer, vorzugsweise um wenigstens einen Faktor 2 elastischer als die Verriegelungskörper. Dadurch wird auf einfache und vorteilhafte Weise mittels Verriegelungskörpern, die sich kaum elastisch verformen (z.B. Stahlkugeln), eine weitgehend starre Verriegelung zwischen Kugelkopf und Gelenkgehäuse sichergestellt und gleichzeitig mittels elastisch verformbarer Zwischenelemente (z.B. Elastomerkörpern) eine Kompensation von auftretenden Fertigungstoleranzen erreicht. Damit lässt sich ein unerwünschtes Spiel in der Verriegelungsstellung des Kugelgelenks äußerst zuverlässig verhindern.

In einer weiteren Ausführungsform können die Zwischenelemente geschlitzt und quer zur Längsrichtung des Kanals elastisch aufspreizbar sein. Bei einer Beaufschlagung in Längsrichtung des Kanals verklemmt sich das Zwischenelement in diesem Fall innerhalb des Führungskanals, was ebenfalls zu einer besonders starren und spielfreien Verriegelung des Kugelgelenks beiträgt.

Alternativ und besonders kostensparend können die Zwischenelemente und Verriegelungskörper jedoch auch identisch (in Geometrie und Material) ausgebildet sein, vorzugsweise als Kugeln, insbesondere Stahlkugeln. Bei guter Passung der zusammenwirkenden Bauteile sowie infolge einer Selbstzentrierung der 3-Punkt-Abstützung lässt sich auch mit dieser Konstruktion eine weitgehend starre und spielfreie Gelenkverriegelung erreichen.

Besonders bevorzugt kommt der beschriebene Verriegelungsmechanismus bei fahrzeugseitigen Kupplungsbaugruppen einer Anhängerkupplung für Fahrzeuge zum Einsatz.

Ein weiteres Ziel der Erfindung ist die Schaffung einer verschwenkbaren, fahrzeugseitigen Kupplungsbaugruppe, die in ihren Verriegelungsstellungen im wesentlichen spielfrei ist.

Erfindungsgemäß wird eine Kupplungsbaugruppe vorgeschlagen, umfassend ein fahrzeugfestes Halteteil, einen Kupplungsarm, der an einem freien Ende ein Kopplungselement zum lösbaren Befestigen eines Anhängers aufweist, ein Kugelgelenk, das aus einem Gelenkzapfen mit einem Kugelkopf und einem Gelenkgehäuse, das den Kugelkopf aufnimmt, gebildet ist, wobei das Halteteil und der Kupplungsarm durch das Kugelgelenk schwenkbar verbunden sind, ein in dem Kugelkopf vorgesehenes Betätigungselement und zumindest einen in einem seitlichen Kanal des Kugelkopfes geführten Verriegelungskörper, der in einer Verriegelungsstellung der Kupplungsbaugruppe in eine Verriegelungstasche des Gelenkgehäuses eingreift, um den Kupplungsarm bezüglich des Halteteils zu arretieren, wobei das Betätigungselement mit dem Verriegelungskörper über ein Zwischenelement in Verbindung steht, welches in dem Kanal geführt und in der Verriegelungsstellung der Kupplungsbaugruppe quer zur Längsrichtung des Kanals elastisch verformt ist.

Alternativ oder zusätzlich ist das Zwischenelement in der Verriegelungsstellung der Kupplungsbaugruppe in der Längsrichtung des Kanals vorzugsweise elastisch verformt.

Das Zwischenelement ist dabei (insbesondere deutlich) elastischer als der Verriegelungskörper und kompensiert in der Verriegelungsstellung der Kupplungsbaugruppe durch seine Verformung das vorhandene Spiel zwischen dem Verriegelungskörper und dessen Führungskanal. Die höhere Elastizität des Zwischenelements kann durch ein anderes Material (mit geringerem Elastizitätsmodul) und/oder durch eine andere Geometrie verglichen mit dem Verriegelungskörper erreicht werden. Die höhere Elastizität des Verriegelungskörpers wird insbesondere auf die Krafteinleitung in Längsrichtung des Kanals bezogen.

Vorzugsweise wird das Zwischenelement in der Verriegelungsstellung der Kupplungsbaugruppe so mit einer Kanalwand verklemmt, dass der Verriegelungskörper im wesentlichen spielfrei in der Verriegelungstasche verblockt ist. Dementsprechend minimieren sich in der Verriegelungsstellung der Kupplungsbaugruppe sowohl die Klappergeräusche als auch die Bauteilbeanspruchungen.

In einer bevorzugten Ausführungsform ist das Zwischenelement in der Verriegelungsstellung der Kupplungsbaugruppe, verglichen mit einer Nichtverriegelungsstellung, in Längsrichtung des Kanals komprimiert und quer dazu so aufgeweitet, dass es gegen eine Kanalwand gedrückt wird. Hierbei entsteht eine im wesentlichen spielfreie Arretierung zwischen dem Kugelkopf und dem Gelenkgehäuse, und damit auch zwischen dem fahrzeugfesten Halteteil und dem Kupplungsarm.

In einer weiteren vorteilhaften Ausführungsform ist das Gelenkgehäuse relativ zum Gelenkzapfen so geführt, dass es beim Verschwenken relativ zum Gelenkzapfen einer vorgegebenen, insbesondere nicht-ebenen Bahnkurve folgt. Durch diese Maßnahme kann in Abhängigkeit von den jeweiligen Bauraumverhältnissen im Bereich eines Fahrzeughecks eine gewünschte Schwenkbewegung zwischen einer Gebrauchsstellung (in der ein Anhänger angekoppelt werden kann) und einer Nichtgebrauchsstellung (in der die Kupplungsbaugruppe eine sichtgeschützte Position im Bereich des Fahrzeughecks einnimmt) festgelegt werden. Die Bewegung der Kupplungsbaugruppe entspricht dabei vorzugsweise einer Schwenkbewegung um wenigstens zwei Achsen.

Weitere Merkmale und Vorteile der Erfindung ergeben sich aus der nachfolgenden Beschreibung bevorzugter Ausführungsformen unter Bezugnahme auf die Zeichnungen. In diesen zeigen:
- Figur 1 die perspektivische Darstellung einer an einem Fahrzeugheck angebrachten, erfindungsgemäßen Kupplungsbaugruppe in einer Gebrauchsstellung und einer Nichtgebrauchsstellung;
- Figur 2 die Rückansicht der erfindungsgemäßen Kupplungsbaugruppe gemäß Figur 1;
- Figuren 3a bis 3c eine erfindungsgemäße Kupplungsbaugruppe in der Gebrauchsstellung, einer Zwischenstellung und der Nichtgebrauchsstellung;
- Figur 4 einen Längsschnitt durch die erfindungsgemäße Kupplungsbaugruppe gemäß einer ersten Ausführungsform;
- Figur 5 einen Querschnitt V-V durch die Kupplungsbaugruppe gemäß Figur 4;
- Figur 6 die perspektivische Detailansicht eines Zwischenelements der Kupplungsbaugruppe gemäß den Figuren 4 und 5;
- Figur 7 eine perspektivische Explosionsansicht der erfindungsgemäßen Kupplungsbaugruppe gemäß einer zweiten Ausführungsform;
- Figur 8 eine perspektivische Untersicht eines Gehäusedeckels der Kupplungsbaugruppe gemäß Figur 7;
- Figur 9 einen Längsschnitt durch die Kupplungsbaugruppe gemäß Figur 7 in einer Nichtverriegelungsstellung;
- Figur 10 einen Längsschnitt durch die Kupplungsbaugruppe gemäß Figur 7 in einer Verriegelungsstellung;
- Figur 11 eine perspektivische Explosionsansicht der erfindungsgemäßen Kupplungsbaugruppe gemäß einer dritten Ausführungsform;
- Figur 12 die perspektivische Ansicht einer Einsatzhülse eines Gelenkgehäuses der erfindungsgemäßen Kupplungsbaugruppe gemäß einer vierten Ausführungsform;
- Figur 13 eine Frontalansicht der Einsatzhülse gemäß Figur 12;
- Figur 14 eine Seitenansicht der Einsatzhülse gemäß Figur 12;
- Figur 15 eine perspektivische Explosionsansicht der erfindungsgemäßen Kupplungsbaugruppe gemäß einer fünften Ausführungsform;
- Figur 16 die Frontalansicht eines Kopplungsrings der Kupplungsbaugruppe gemäß Figur 15;
- Figur 17 die Seitenansicht des Kopplungsrings gemäß Figur 16;
- Figur 18 die erfindungsgemäße Kupplungsbaugruppe gemäß Figur 15 im zusammengesetzten Zustand;
- Figur 19 eine perspektivische Teilschnittansicht der erfindungsgemäßen Kupplungsbaugruppe gemäß einer sechsten Ausführungsform mit einem erfindungsgemäßen Verriegelungsmechanismus in einer Nichtverriegelungsstellung;
- Figur 20 die Kupplungsbaugruppe gemäß Figur 19 in einer Verriegelungsstellung;
- Figur 21 einen schematischen Radialschnitt durch die Kupplungsbaugruppe gemäß Figur 20; und
- Figur 22 perspektivische Ansichten eines Betätigungselements der Kupplungsbaugruppe gemäß den Figuren 19 bis 21.

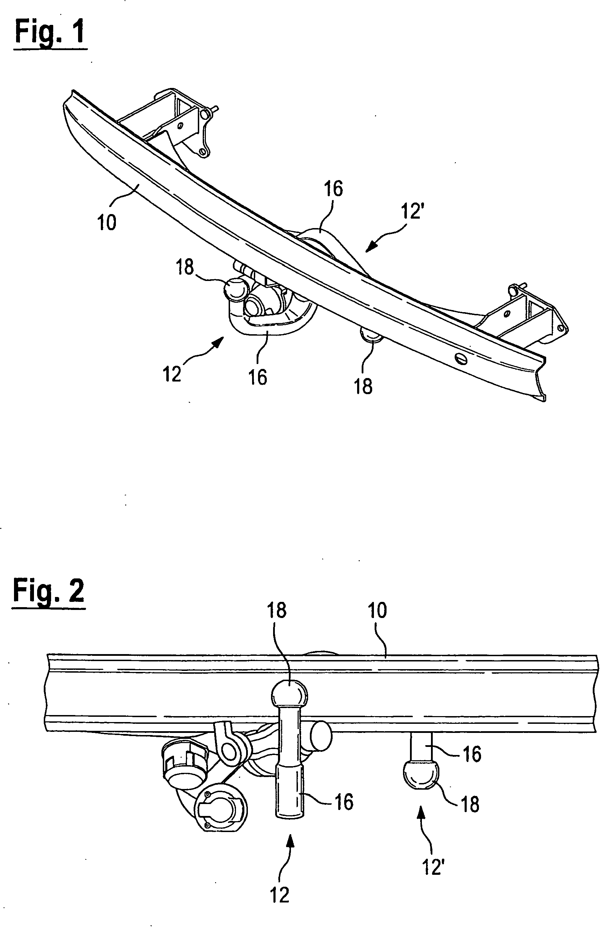

Stellvertretend für das Heck eines nicht dargestellten Fahrzeugs zeigt die Figur 1 einen Stoßfänger 10, an dem eine fahrzeugseitige, schwenkbare Kupplungsbaugruppe 12 einer Anhängerkupplung für Fahrzeuge befestigt ist. Die Kupplungsbaugruppe 12 ist dabei in zwei Schwenkpositionen dargestellt, wobei das Bezugszeichen 12 in den Figuren 1 und 2 auf eine Gebrauchsstellung zeigt und das Bezugszeichen 12' eine Nichtgebrauchsstellung kennzeichnet.

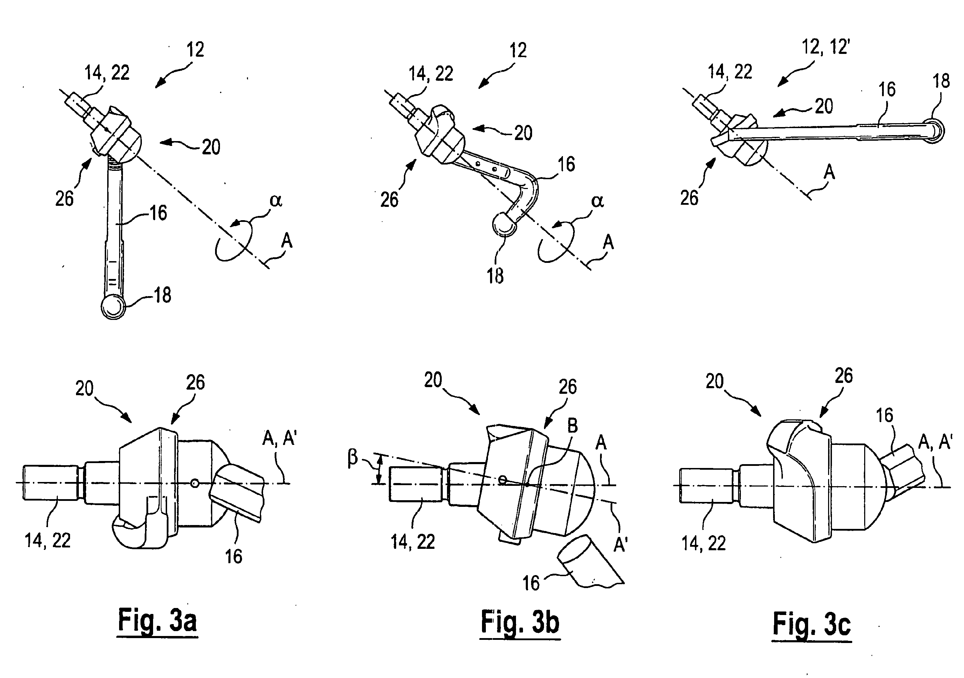

Die Kupplungsbaugruppe 12 umfasst ein fahrzeugfestes Halteteil 14 (siehe Figur 3) und einen Kupplungsarm 16, der an einem freien Ende ein Kopplungselement 18 zum lösbaren Befestigen eines Anhängers (nicht gezeigt) aufweist. Das Halteteil 14 und der Kupplungsarm 16 sind durch ein Kugelgelenk 20 schwenkbar verbunden (siehe Figuren 3 bis 11). Somit kann der Kupplungsarm 16 aus seiner Gebrauchsstellung (Bezugszeichen 12), in der die Kopplung mit einem Anhänger möglich ist, in seine Nichtgebrauchsstellung 12' überführt werden, in der der Kupplungsarm 16 für einen Betrachter sichtgeschützt in einem Heckbereich des Fahrzeugs "verschwindet", z.B. unterhalb des Heckstoßfängers bzw. hinter dem Heckstoßfänger.

Das fahrzeugfeste Halteteil 14 ist in Figur 1 am Stoßfänger 10 des Fahrzeugs montiert. Alternativ oder zusätzlich kann das Halteteil 14 selbstverständlich auch an anderen fahrzeugfesten Bauelementen im Heckbereich des Fahrzeugs, insbesondere an einem Fahrzeugrahmen, befestigt sein.

Die Rückansicht der Kupplungsbaugruppe 12 gemäß Figur 2 verdeutlicht, dass in der Nichtgebrauchsstellung 12' lediglich ein kurzer Abschnitt des Kupplungsarms 16 in vertikaler Richtung unterhalb des Stoßfängers 10 vorsteht. Da der Kupplungsarm 16 in dieser Nichtgebrauchsstellung 12' in Fahrzeuglängsrichtung unter das Fahrzeug verschwenkt ist, ist der Kupplungsarm 16 für einen Betrachter verdeckt positioniert und entsprechend nicht zu erkennen.

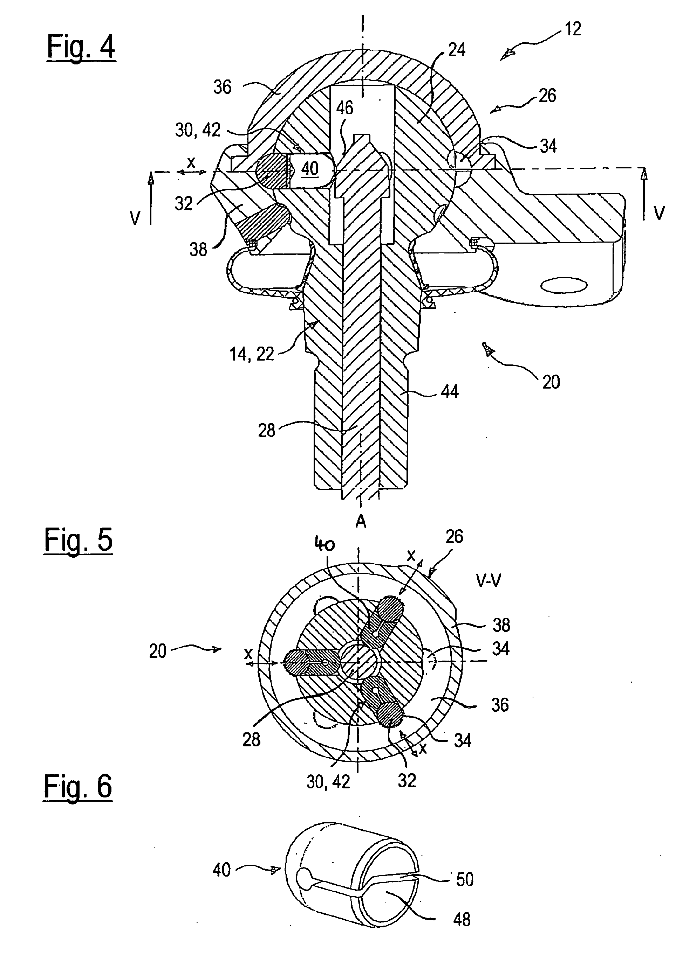

Das Kugelgelenk 20 umfasst gemäß Figur 4 einen Gelenkzapfen 22 mit einem Kugelkopf 24 sowie ein Gelenkgehäuse 26, das den Kugelkopf 24 aufnimmt. Der Gelenkzapfen 22 entspricht im vorliegenden Beispiel dem fahrzeugfesten Halteteil 14, und das Gelenkgehäuse 26 ist starr mit dem Kupplungsarm 16 verbunden.

Die Figuren 3a bis 3c zeigen die Kupplungsbaugruppe 12 in unterschiedlichen Schwenkpositionen.

Die Längsrichtung des Gelenkzapfens 22 definiert eine Gelenkachse A, um die der Kupplungsarm 16 relativ zum Halteteil 14 verschwenkt werden kann, und stellt eine erste Schwenkachse dar.

Die Figur 3a zeigt die Kupplungsbaugruppe 12 in ihrer Gebrauchsstellung, wohingegen die Figur 3b eine Zwischenstellung offenbart, in welcher der Kupplungsarm 16 relativ zum Halteteil 14 bezüglich der ersten Schwenkachse A um einen Winkel α von etwa 90° verdreht ist (vgl. Figuren 3a und 3b, oben).

Neben dieser Drehung um die erste Schwenkachse A findet beim Schwenken des Kupplungsarms 16 aus seiner Gebrauchsstellung in die Zwischenstellung auch ein "Kippen" des Kugelgelenks 20 um eine zweite Schwenkachse B statt (vgl. Figur 3b, unten). Das Kippen um die zweite Schwenkachse B bewirkt, dass sich eine Gehäuseachse A' nicht mehr koaxial zur ersten Schwenkachse A bzw. zur Längsrichtung des Gelenkzapfens 22 erstreckt, sondern um einen Winkel β verkippt ist. Der Kippwinkel β liegt dabei vorzugsweise in der Größenordnung von etwa 5° bis 10°. Jedoch kann der Kippwinkel β auch andere Werte annehmen.

In der Figur 3c ist der Kupplungsarm 16 aus der Zwischenstellung (Figur 3b) relativ zum Halteteil 14 in der gleichen Drehrichtung um einen Winkel α von etwa weiteren 90° bezüglich der ersten Schwenkachse A verdreht, so dass die Kupplungsbaugruppe 12 in Figur 3c ihre Nichtgebrauchsstellung 12' einnimmt (Figur 3c, oben). Gleichzeitig mit der Verdrehung um diese weiteren 90° bezüglich der ersten Schwenkachse A wird die Kippbewegung bezüglich der zweiten Schwenkachse B wieder rückgängig gemacht, so dass die Gehäuseachse A' und die erste Schwenkachse A wieder koaxial verlaufen (Figur 3c, unten).

Die Bewegungsabfolge gemäß der Darstellung der Figuren 3a bis 3c verdeutlicht, dass der Kupplungsarm 16 beim Verschwenken von der Gebrauchsstellung in die Nichtgebrauchsstellung 12' der Kupplungsbaugruppe 12 eine Schwenkbewegung um wenigstens zwei Achsen erfährt, auch wenn sich die beiden Endstellungen, d.h. die Gebrauchsstellung und die Nichtgebrauchsstellung 12' lediglich durch Verschwenken des Kupplungsarms 16 relativ zum Halteteil 14 um etwa 180° bezüglich der ersten Schwenkachse A ineinander überführen ließen. Durch die zusätzliche Kippbewegung um die zweite Schwenkachse B lässt sich die Bewegung des Kupplungsarms 16 in vorteilhafter Weise flexibel an die Bauraumverhältnisse im Bereich des Fahrzeughecks anpassen. Die Winkelangaben sind dabei lediglich beispielhaft zu verstehen und richten sich im Detail nach dem jeweils zur Verfügung stehenden Bauraum.

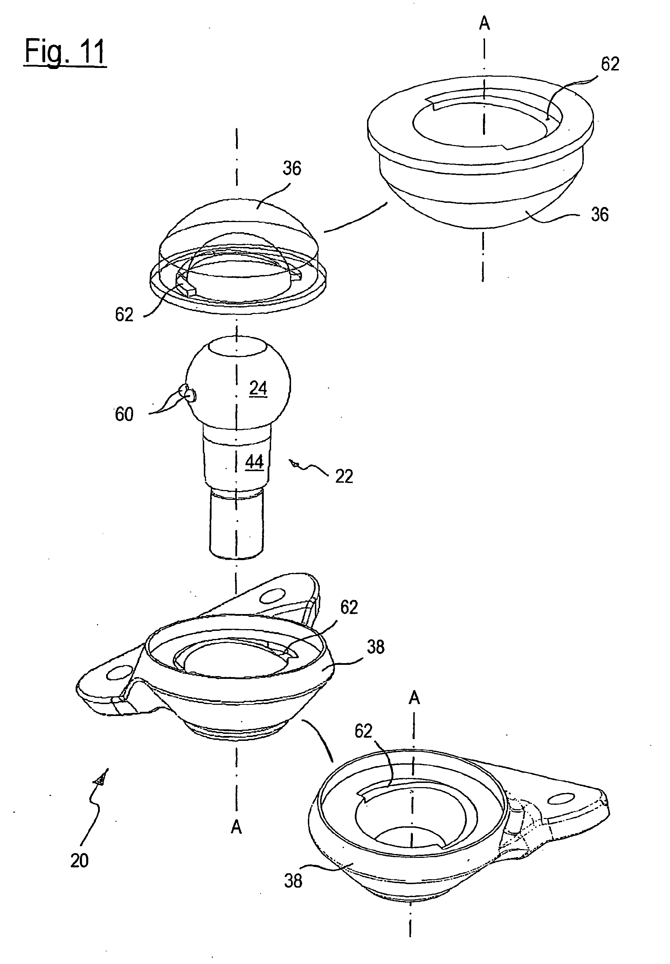

Auf die Führung des Kupplungsarms 16 zwischen den Endstellungen gemäß den Figuren 3a und 3c wird später anhand der Figuren 11 bis 18 noch genauer eingegangen.

Das Gelenkgehäuse 26 ist relativ zum Gelenkzapfen 22 zwischen zwei vordefinierten Endpositionen, nämlich der Gebrauchsstellung und der Nichtgebrauchsstellung 12' schwenkbar, wobei die Kupplungsbaugruppe 12 darüber hinaus auch in wenigstens einer der Endpositionen eine Verriegelungsstellung einnimmt. Diese Endposition ist besonders bevorzugt die Gebrauchsposition der Kupplungsbaugruppe 12. Darüber hinaus ergeben sich jedoch auch Vorteile, wenn die Kupplungsbaugruppe 12 zusätzlich in ihrer Nichtgebrauchsstellung 12' eine Verriegelungsstellung einnimmt.

Die Figur 4 zeigt einen Längsschnitt durch die Kupplungsbaugruppe 12 gemäß einer ersten Ausführungsform, mit dem Kugelgelenk 20, das den Gelenkzapfen 22 mit dem Kugelkopf 24 sowie das Gelenkgehäuse 26 umfasst, welches den Kugelkopf 24 aufnimmt. Im Kugelkopf 24 ist ein Betätigungselement 28 vorgesehen sowie wenigstens ein in einem seitlichen Kanal 30 des Kugelkopfs 24 geführter Verriegelungskörper 32, der in der Verriegelungsstellung der Kupplungsbaugruppe 12 (vgl. Figur 4) in eine Verriegelungstasche 34 des Gelenkgehäuses 26 eingreift, um den Kupplungsarm 16 bezüglich des Halteteils 14 zu arretieren bzw. festzulegen. Das Gelenkgehäuse 26 ist bei dieser Ausführungsform zweiteilig ausgebildet und umfasst einen Gehäusedeckel 36 sowie einen fest mit dem Gehäusedeckel 36 verbundenen Gehäusering 38.

Das Betätigungselement 28 steht mit dem Verriegelungskörper 32 über ein Zwischenelement 40 in Verbindung, welches in dem Kanal 30 geführt und in der Verriegelungsstellung der Kupplungsbaugruppe 12 quer zu einer Längsrichtung x des Kanals 30 elastisch verformt, insbesondere elastisch aufgeweitet ist. Das Zwischenelement 40 wird dadurch so in der Kanalwand 42 verklemmt, dass der Gelenkzapfen 22 relativ zum Gelenkgehäuse 26 spielfrei arretiert ist.

Bezogen auf den Kugelkopf 24 entspricht die Längsrichtung x in den Figuren 4 und 5 einer Radialrichtung.

Alternativ oder zusätzlich ist das wenigstens eine Zwischenelement 40 vorzugsweise auch in Längsrichtung x des Kanals 30 nachgiebig ausgeführt, insbesondere elastisch verformbar. Dadurch wird auch bei auftretendem Bauteilverschleiß die spielfreie Verriegelung zwischen dem Gelenkzapfen 22 und dem Gelenkgehäuse 26 sichergestellt.

Im Querschnitt V-V der Figur 5 wird deutlich, dass in der ersten Ausführungsform der Kupplungsbaugruppe 12 drei gleichmäßig über den Umfang des Kugelkopfs 24 verteilte, als Kugeln ausgebildete Verriegelungskörper 32 vorgesehen sind.

Das Betätigungselement 28 ist eine durch einen hohlen Gelenkschaft 44 des Gelenkzapfens 22 in den Kugelkopf 24 ragende Stange mit einer Konus- oder Keilfläche 46, die das Zwischenelement 40 kontaktiert. Das Betätigungselement 28 ist in dem hohlen Gelenkschaft 44 axial verschieblich aufgenommen bzw. geführt, wobei es in einer axial oberen Endstellung über seine Konus- oder Keilfläche 46 das zumindest eine Zwischenelement 40 radial nach außen drückt, nämlich in Eingriff bzw. in Kontakt mit dem Verriegelungskörper 32, welcher dadurch wiederum radial nach außen in eine zugeordnete Verriegelungstasche 34 gedrückt wird.

Das Betätigungselement 28 lässt sich bevorzugt manuell und/oder motorisch (magnetisch, elektromotorisch o.ä.) antreiben.

Die Figur 6 zeigt die perspektivische Detailansicht eines solchen Zwischenelements 40, welches aus einem elastischen Material, vorzugsweise einem elastischen Kunststoff, gefertigt ist. Im allgemeinen ist jedes Material, welches die relevanten Anforderungen bezüglich der Nachgiebigkeit bzw. Elastizität erfüllt, für die Herstellung des Zwischenelements geeignet.

Gemäß Figur 6 ist das Zwischenelement 40 geschlitzt, so dass es quer zur Längsrichtung x des Kanals 30 elastisch aufspreizbar ist. Um eine spielfreie Arretierung des Kugelgelenks 20 auch bei auftretendem Bauteilverschleiß zu gewährleisten, ist das Zwischenelement 40 bevorzugt auch in seiner Längsrichtung (bzw. in Längsrichtung x des Kanals 30) elastisch verformbar.

Auf einer dem Verriegelungskörper 32 zugewandten Stirnseite weist das Zwischenelement eine Vertiefung 48 auf, in die der Verriegelungskörper 32 in der Verriegelungsstellung der Kupplungsbaugruppe 12 hineinragt. Die Vertiefung 48 ist dabei vorzugsweise so ausgebildet, dass sie den zugeordneten Verriegelungskörper 32 quer zur Längsrichtung x des Kanals 30 positioniert. Falls der Verriegelungskörper 32 kugelförmig ausgebildet ist, hat es sich als besonders vorteilhaft erwiesen, wenn die Vertiefung 48 im wesentlichen eine kalotten- oder kegelartige Form hat.

Ausgehend von einer Nichtverriegelungsstellung wird im folgenden kurz auf die Funktionsweise der Kupplungsbaugruppe 12 eingegangen:

Beim Versuch, den Kupplungsarms 16 durch äußere Einwirkung relativ zum Halteteil 14 zu verschwenken, wirkt auf die Verriegelungskörper 32 eine radial nach innen gerichtete Kraftkomponente. Das Betätigungselement 28 befindet sich in der Nichtverriegelungsstellung in einer (bezogen auf Figur 4) unteren Position, so dass die Verriegelungskörper 32 und die Zwischenelemente 40 aufgrund dieser Kraftkomponente radial nach innen gleiten, bis die Verriegelungskörper 32 nicht mehr in die Verriegelungstaschen 34 des Gelenkgehäuses 26 ragen. Der Kupplungsarm 16 kann nun relativ zum Halteteil 14 verschwenkt werden. Soll das Kugelgelenk 20 wieder in einer Verriegelungsstellung arretiert werden, so muss das Betätigungselement 28 (bezogen auf Figur 4) in axialer Richtung nach oben bewegt werden. Die Zwischenelemente 40 gleiten dabei auf der Konus- oder Keilfläche 46 des Betätigungselements 28 und werden in ihren jeweils zugeordneten Kanälen 30 radial nach außen verschoben. Dadurch drücken sie die Verriegelungskörper 32 in jeweils zugeordnete Verriegelungstaschen 34 des Gelenkgehäuses 26.

Die Verriegelungstaschen 34 sind dabei so geformt, dass sie bei nach außen gerichtetem radialen Druck der Verriegelungskörper 32 spielfrei mit dem Verriegelungskörper 32 verbunden sind. Besonders bevorzugt sind die Verriegelungstaschen 34 nach Art eines Kegels, eines Kegelstumpfes oder einer Kugelkalotte geformt. In der radial äußeren Position des Verriegelungskörpers 32 übt das Betätigungselement 28 weiterhin einen radial nach außen gerichteten Druck auf das Zwischenelement 40 aus, so dass das Zwischenelement 40 in Längsrichtung x des Kanals 30 komprimiert und quer dazu so aufgeweitet wird, dass es gegen die Kanalwand 42 drückt. Wie in den Figuren 5 und 6 zu sehen, weist der Verriegelungskörper 32 einen Schlitz 50 auf, wodurch die Aufweitung quer zur Längsrichtung x des Kanals 30 durch elastisches Aufspreizen besonders vorteilhaft möglich ist. Somit entsteht in der in Figur 4 gezeigten Verriegelungsstellung über die Verriegelungskörper 32 und die zugeordneten Zwischenelemente 40 eine spielfreie Verbindung zwischen dem Gelenkgehäuse 26 und dem Kugelkopf 24, was gleichbedeutend ist mit einer spielfreien Verbindung zwischen dem Kupplungsarm 16 und dem Halteteil 14 der Kupplungsbaugruppe 12. Um ein unerwünschtes "Entriegeln" des Kugelgelenks 20 zu verhindern, ist das Betätigungselement 28 vorzugsweise in Richtung zur Verriegelungsstellung, d.h. in den Figuren 4, 9 und 10 axial nach oben, vorgespannt.

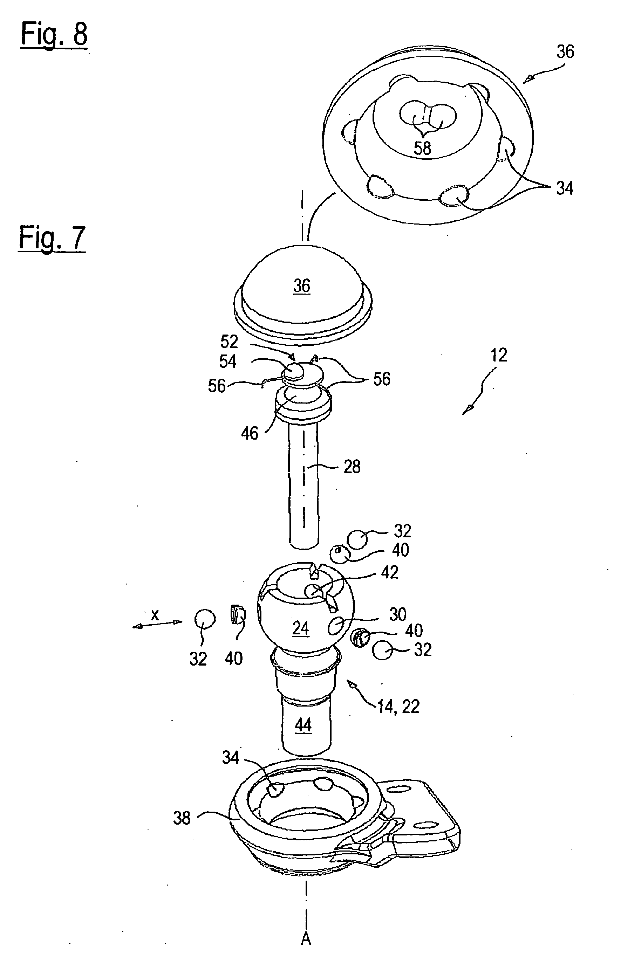

Die Figur 7 zeigt eine Explosionsansicht der Kupplungsbaugruppe 12 gemäß einer zweiten Ausführungsform. Da Konstruktion und Funktionsweise weitgehend mit der ersten Ausführungsform gemäß den Figuren 4 bis 6 übereinstimmen, wird auf die obige Beschreibung verwiesen und lediglich auf Besonderheiten der zweiten Ausführungsform eingegangen, wobei einander entsprechende Bauteile mit gleichen Bezugszeichen versehen sind.

Im Unterschied zur ersten Ausführungsform weist das Betätigungselement 28 gemäß Figur 7 an einem im Kugelkopf 24 befindlichen axialen Ende 52 einen axialen Vorsprung 54 auf, der exzentrisch zur Achse A angeordnet ist. Des weiteren sind am axialen Ende 52 drei radiale, jeweils einem Verriegelungskörper 32 zugeordnete Halterarme 56 ausgebildet.

In der Figur 8 ist der Gehäusedeckel 36 in einer perspektivischen Ansicht von unten dargestellt, in der zwei zum Vorsprung 54 komplementäre Ausnehmungen 58 zu sehen sind.

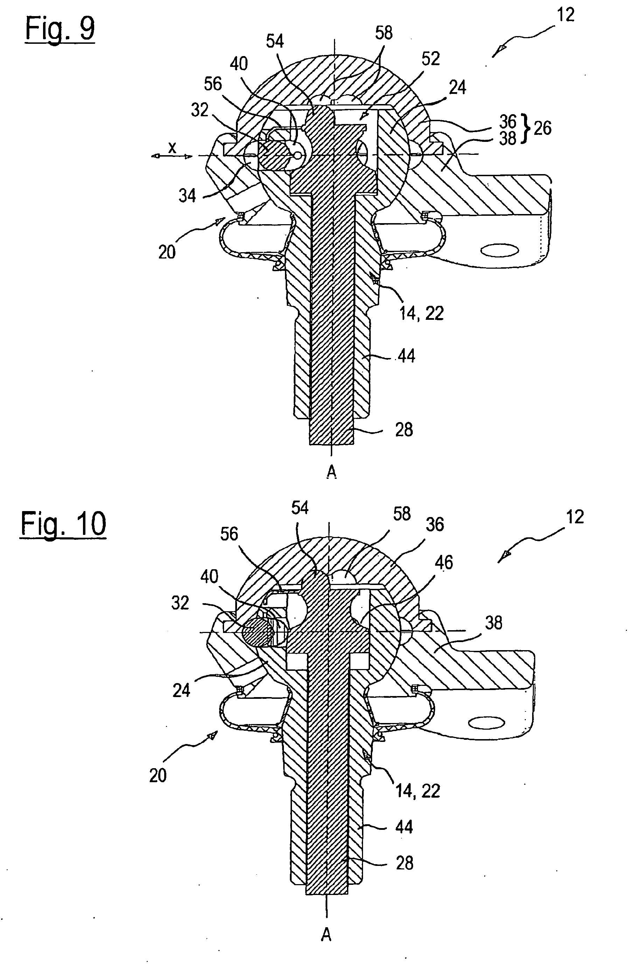

Die Figur 9 zeigt einen Längsschnitt durch die Kupplungsbaugruppe 12 gemäß der zweiten Ausführungsform in einer Nichtverriegelungsstellung. Dabei werden die Verriegelungskörper 32 jeweils von einem zugeordneten Haltearm 56 gehalten, so dass sie sich nicht radial nach außen in die Verriegelungstaschen 34 des Gelenkgehäuses 26 bewegen können.

Die Figur 10 zeigt einen Längsschnitt durch die Kopplungsbaugruppe 12 gemäß der zweiten Ausführungsform in einer Verriegelungsstellung. Das Betätigungselement 28 ist gegenüber Figur 9 relativ zum Gelenkzapfen 22 axial nach oben verschoben. Dadurch sind die Haltearme 56 nicht mehr in Eingriff mit den Verriegelungskörpern 32, welche ihrerseits durch die Konus- oder Keilfläche 46 des Betätigungselements 28 radial nach außen in die Verriegelungstaschen 34 des Gelenkgehäuses 26 beaufschlagt werden. Der axiale Vorsprung 54 greift in dieser Verriegelungsstellung in eine der komplementären Ausnehmungen 58 im Gehäusedeckel 36 ein.

Bezogen auf einen Umfang des Kugelgelenks 20 sind die Verriegelungstaschen 34 im Gelenkgehäuse 26 gleichmäßig unter 60° und die Verriegelungskörper 32 gleichmäßig unter 120° verteilt. Bei dieser Anordnung wäre beispielsweise gemäß der ersten Ausführungsform bei einer Drehung des Gelenkzapfens 22 relativ zum Gelenkgehäuse 26 um die erste Schwenkachse A jeweils nach 60° eine Verriegelung möglich. Um dies zu verhindern, sind in der zweiten Ausführungsform der Vorsprung 54, die mit dem Vorsprung 54 zusammenwirkenden Ausnehmungen 58 und die Haltearme 56 vorgesehen. Ausgehend von Figur 9 ist eine Verriegelung des Kugelgelenks 20 nur dann möglich, wenn der exzentrische Vorsprung 54 axial unter einer komplementären Ausnehmung 58 liegt. Ansonsten kann das Betätigungselement 28 nicht axial nach oben verschoben werden, da es am Gehäusedeckel 36 anstoßen würde. Die Haltearme 56 verhindern dabei gleichzeitig, dass die Verriegelungskörper 32 in möglichen, aber nicht erwünschten Verriegelungsstellungen in die Verriegelungstaschen 34 des Gelenkgehäuses 26 gleiten. Durch die Anordnung der Ausnehmungen 58 muss das Kugelgelenk 20 im vorliegenden Fall jeweils um etwa 180° bzgl. der Achse A verdreht werden, um eine Verriegelungsstellung einnehmen zu können.

Die Figur 11 zeigt links eine teilweise transparent dargestellte Explosionsansicht des Kugelgelenks 20, welches bei der Kupplungsbaugruppe 12 gemäß einer dritten Ausführungsform zum Einsatz kommt, und rechts zusätzliche perspektivische Darstellungen des Gehäusedeckels 36 und des Gehäuserings 38, die im zusammengesetzten Zustand des Kugelgelenks 20 fest miteinander verbunden sind und das Gelenkgehäuse 26 bilden.

Die dritte Ausführungsform zeichnet sich dadurch aus, dass das Gelenkgehäuse 26 relativ zum Gelenkzapfen 22, insbesondere relativ zum Kugelkopf 24 des Gelenkzapfens 22 geführt ist, so dass das Gelenkgehäuse 26 beim Verschwenken relativ zum Gelenkzapfen 22 einer vorgegebenen Bahnkurve folgt. Wie in Figur 11 gezeigt, sind am Kugelkopf 24 des Gelenkzapfens 22 ein Führungsvorsprung 60 und im Gelenkgehäuse 26 eine Führungskulisse 62 ausgebildet, wobei der Führungsvorsprung 60 im zusammengesetzten Zustand des Kugelgelenks 20 in die Führungskulisse 62 eingreift.

Insbesondere die Perspektivansichten des Gehäusedeckels 36 (Figur 11, rechts oben) und des Gehäuserings 38 (Figur 11, rechts unten) verdeutlichen, dass eine die Führungskulisse 62 bildende Nut teilweise im Gehäusedeckel 36 und teilweise im Gehäusering 38 ausgebildet ist, wobei sich die Führungskulisse 62 bezüglich der Achse A über etwa 180° des Gehäuseumfangs erstreckt. In Umfangsrichtung gesehen ist die Nut der Führungskulisse 62 an ihren Rändern jeweils etwa zur Hälfte im Gehäusedeckel 36 und im Gehäusering 38 ausgeformt. Zur Mitte der Führungskulisse 62 hin ist die Nut jedoch zunehmend im Gehäusedeckel 36 ausgebildet, so dass die durch die Führungskulisse 62 gebildete Bahnkurve nicht in einer Ebene senkrecht zur Achse A verläuft. Durch diese Gestaltung der Führungskulisse 62 ergibt sich beim Verschwenken des Gelenkgehäuses 26 relativ zum Gelenkzapfen 22 der Kippwinkel β, wie er in Figur 3b (unten) gezeigt ist.

Alternativ zur Ausführungsform gemäß Figur 11 kann der Führungsvorsprung 60 auch am Gelenkgehäuse 26 und die Führungskulisse 62 im Gelenkzapfen 22 ausgebildet sein.

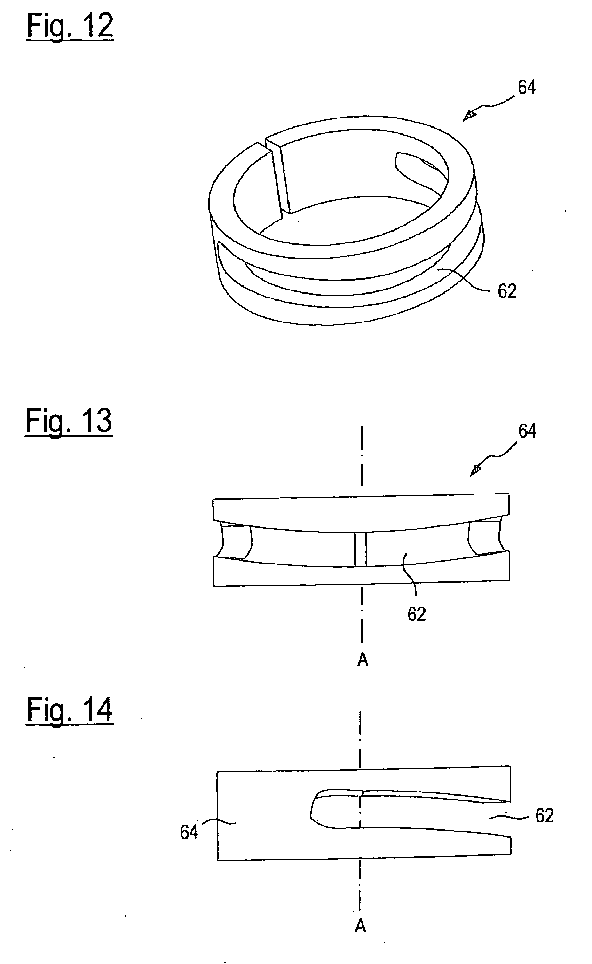

Die Figur 12 zeigt die Perspektivansicht einer Einsatzhülse 64 für das Kugelgelenk 20 der Kupplungsbaugruppe 12 gemäß einer vierten Ausführungsform, wobei diese vierte Ausführungsform als Weiterbildung der Ausführungsform nach der Figur 11 zu verstehen ist. Die Herstellung einer in Abhängigkeit vom Bauraum des jeweiligen Fahrzeugmodells individualisierten Führungskulisse 62 im Gelenkgehäuse 26 ist relativ teuer, da der Gehäusedeckel 36 und/oder der Gehäusering 38 aufwendig bearbeitet werden müssen (vgl. Figur 11).

Die vierte Ausführungsform der Kupplungsbaugruppe 12 hat den Vorteil einer vergleichsweise einfachen Herstellung eines Gehäuserohlings, bei dem der Gehäusedeckel 36 und/oder der Gehäusering 38 für alle Fahrzeugmodelle so ausgebildet sind, dass sie die Einsatzhülse 64 aufnehmen können. Im montierten Zustand des Kugelgelenks 20 ist die Einsatzhülse 64 dabei drehfest und unverschieblich am Gehäuserohling befestigt und bildet zusammen mit dem Gehäuserohling das Gelenkgehäuse 26. Die Ausbildung der individualisierten, beispielsweise auf das Fahrzeugmodell abgestimmten Führungskulisse 62 kann dann mit vergleichsweise geringem Aufwand in der standardisierten und austauschbaren Einsatzhülse 64 erfolgen.

Insbesondere in der Frontal- und Seitenansicht der Einsatzhülse 64 gemäß den Figuren 13 und 14 ist zu sehen, dass die durch die Führungskulisse 62 festgelegte Bahnkurve des Kugelgelenks 20 auch in der vierten Ausführungsform nicht eben, sondern gekrümmt ist, so dass sich auch hier beim Verschwenken des Gelenkgehäuses 26 relativ zum Gelenkzapfen 22 ein Kippwinkel β ergibt.

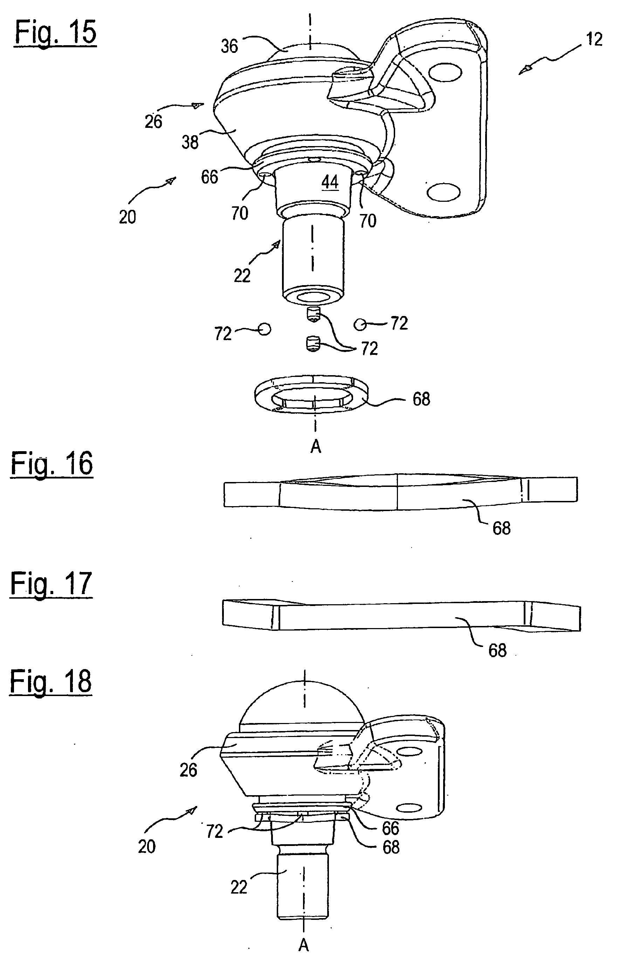

Die Figur 15 zeigt ein Kugelgelenk 20 für die Kupplungsbaugruppe 12 gemäß einer fünften Ausführungsform. Im Unterschied zur Ausführungsform nach den Figuren 11 bis 14 ist dabei die Führung des Gelenkgehäuses 26 relativ zum Gelenkzapfen 22 nicht mittels einer Kulissenführung zwischen dem Kugelkopf 24 und dem Gelenkgehäuse 26 realisiert, sondern durch zusammenwirkende Kopplungsringe 66, 68. Ein erster Kopplungsring 66 ist dabei starr am Gelenkgehäuse 26, konkret am Gehäusering 38 des Gelenkgehäuses 26 befestigt, vorzugsweise sogar einstückig mit dem Gelenkgehäuse 26 ausgebildet. Der erste Kopplungsring 66 weist auf einer dem Gehäusedeckel 36 abgewandten Stirnseite Vertiefungen 70 auf, mit denen Führungselemente 72 in Umfangsrichtung des Kopplungsrings 66 positioniert werden. Über die Führungselemente 72 wirkt der erste Kopplungsring 66 mit einem zweiten Kopplungsring 68 zusammen, der im montierten Zustand (Figur 18) unverschieblich und drehfest mit dem Gelenkzapfen 22 verbunden ist. Falls sich beide Kopplungsringe 66, 68 jeweils in einer Ebene senkrecht zur Schwenkachse A erstrecken, ist lediglich eine einachsige Drehung des Gelenkgehäuses 26 relativ zum Gelenkzapfen 22 um die Achse A möglich. In den Figuren 16 und 17 sind Seitenansichten des zweiten Kopplungsrings 68 dargestellt, die zeigen, dass der zweite Kopplungsring 68 nicht eben ist. Infolge dieser Unebenheit des zweiten Kopplungsrings wird die Drehbewegung um die erste Schwenkachse A von einer Kippbewegung um die zweite Schwenkachse B überlagert (vgl. Figur 3b, unten). Um ein Verklemmen der Gelenkteile bei einer Gelenkbewegung zu verhindern, sind im vorliegenden Beispiel gemäß Figur 15 vier Führungselemente 72 vorgesehen, von denen zwei gegenüberliegende Führungselemente 72 als Kugeln und die beiden anderen gegenüberliegenden Führungselemente als in axialer Richtung elastische, zylindrische Stößel ausgeführt sind. Die Kugeln sind im Vergleich zu den Stößeln als starr anzusehen und sorgen dafür, dass das Gelenkgehäuse 26 bei einer Drehbewegung des Gelenkgehäuses 26 relativ zum Gelenkzapfen 22 um die erste Schwenkachse A entsprechend der Kontur des zweiten Kopplungsrings 68 zusätzlich verkippt wird. Die beiden axial elastischen Stößel sorgen lediglich für eine Gelenkführung und gleichen den bei einer Drehbewegung um die erste Schwenkachse A variablen Abstand zwischen den Kopplungsringen 66, 68 durch ihre Elastizität aus.

Bevorzugte Ausführungsvarianten der Kupplungsbaugruppe 12 weisen in ihrer Gebrauchsstellung und in ihrer Nichtgebrauchsstellung 12' Verriegelungsstellungen auf, in denen das Kugelgelenk 20 der Kupplungsbaugruppe 12 verriegelt wird.

Eine vorteilhafte Möglichkeit für eine Gelenkverriegelung ist unter Bezugnahme auf die Ausführungsform gemäß den Figuren 4 bis 6 und auf die Ausführungsform gemäß den Figuren 7 und 8 erläutert. Besonders bevorzugt ist zwischen den Verriegelungsstellungen in der Gebrauchsstellung und der Nichtgebrauchsstellung 12' eine Gelenkführung zwischen dem Gelenkzapfen 22 und dem Gelenkgehäuse 26 vorgesehen, so dass der Kupplungsarm 16 zwischen seiner Gebrauchsstellung und seiner Nichtgebrauchsstellung 12' einer festen vorgegebenen Bahnkurve folgt. Diese Bahnkurve entspricht dabei vorzugsweise einem überlagerten Verschwenken des Kugelgelenks 20 um mehrere Achsen, insbesondere um zwei Achsen A, B.

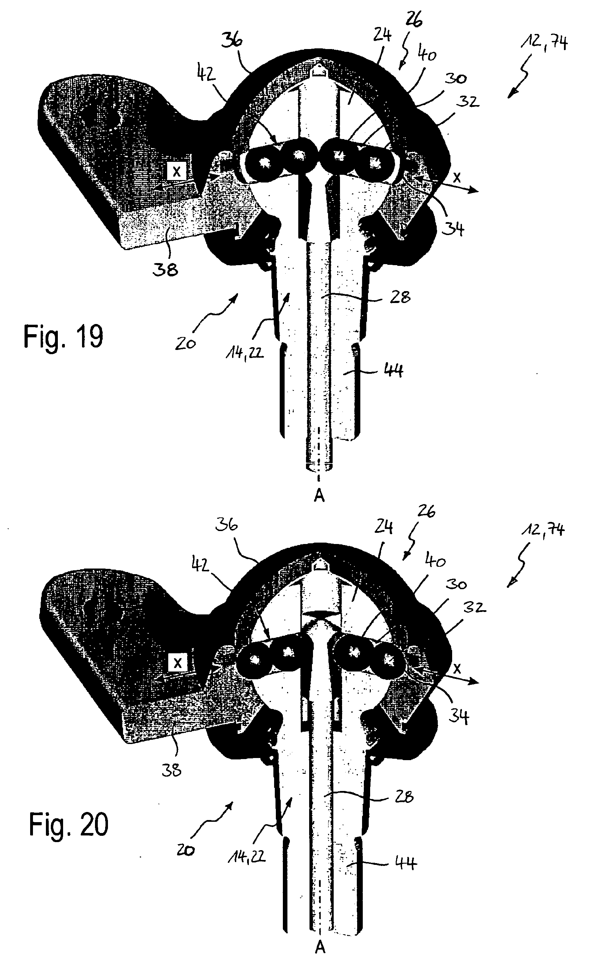

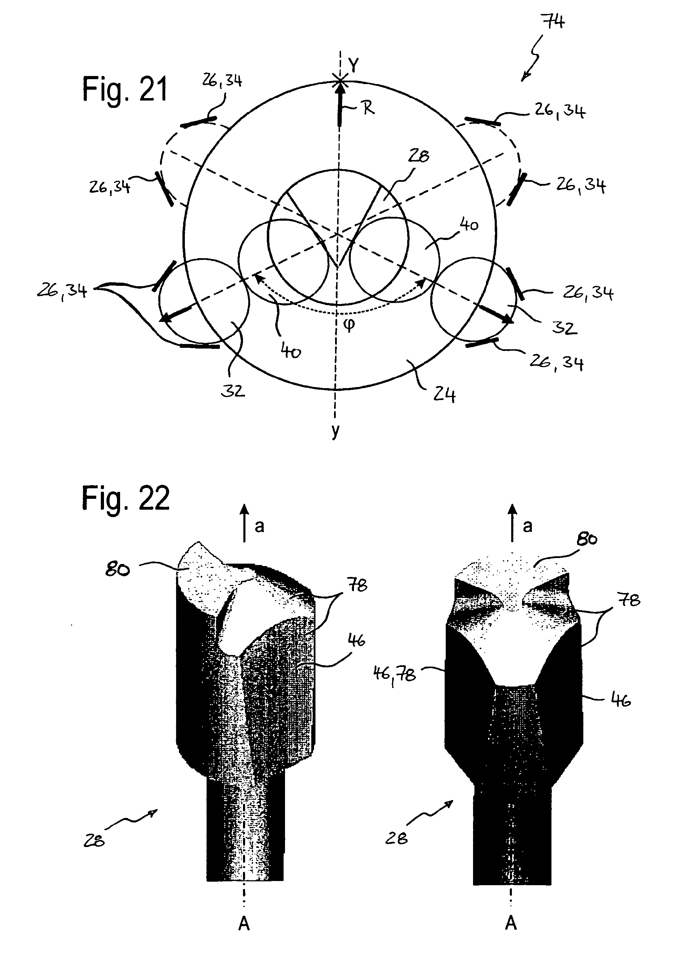

Die Figuren 19 bis 22 zeigen allgemein einen Verriegelungsmechanismus 74 mit dem Kugelgelenk 20, welches aus dem Gelenkzapfen 22 mit dem Kugelkopf 24 sowie dem Gelenkgehäuse 26, das den Kugelkopf 24 aufnimmt, gebildet ist. In dem Kugelkopf 24 ist das Betätigungselement 28 in einer Betätigungsrichtung a verschiebbar angeordnet. Genau zwei durch das Betätigungselement 28 beaufschlagbare Verriegelungskörper 32 sind in jeweils eigenen, seitlichen Kanälen 30 des Kugelkopfes 24 aufgenommen und in Längsrichtung x des jeweiligen Kanals 30 verschieblich geführt. Während der Gelenkzapfen 22 in einer Nichtverriegelungsstellung des Kugelgelenks 20 relativ zum Gelenkgehäuse 26 verschwenkbar ist (Figur 19), greift in einer Verriegelungsstellung des Kugelgelenks 20 jeder Verriegelungskörper 32 in eine Verriegelungstasche 34 des Gelenkgehäuses 26 ein, um das Kugelgelenk 20 zu arretieren (Figur 20). Gemäß Figur 21 schließen dabei die Längsrichtungen x der beiden Kanäle 30 einen Winkel ϕ von 0°<ϕ<180°, vorzugsweise 90°<ϕ<180° und besonders bevorzugt von etwa 120° ein.

Der allgemeine Verriegelungsmechanismus 74 ist in den Figuren 19 bis 21 Teil einer sechsten Ausführungsform der fahrzeugseitigen Kupplungsbaugruppe 12 einer Anhängerkupplung für Fahrzeuge. Selbstverständlich sind alle Einzelmerkmale der verschiedenen Ausführungsformen der Kupplungsbaugruppen 12 in sinnvoller Weise kombinierbar. Um Wiederholungen zu vermeiden, wird mit Bezug auf bereits vorgestellten Ausführungsvarianten lediglich auf die Ausführungsformen 1 bis 5 sowie die Beschreibung der Figuren 1 bis 18 verwiesen und im folgenden nur auf weitere Besonderheiten eingegangen.

Wie in den Figuren 19 bis 21 dargestellt, erstrecken sich die Führungskanäle 30 bezüglich des Kugelkopfes 24 in radialer Richtung und liegen im wesentlichen in einer zur Betätigungsrichtung a senkrechten Ebene. Ferner ist in jedem Kanal 30 ein Zwischenelement 40 vorgesehen, das zumindest in der Verriegelungsstellung radial zwischen dem Betätigungselement 28 und dem zugeordneten Verriegelungskörper 32 angeordnet ist. Mit anderen Worten sind jeweils ein Zwischenelement 40 und ein Verriegelungskörper 32 in Längsrichtung x der Kanäle 30 geführt, wobei das Betätigungselement 28 jeweils über die Zwischenelemente 40 mit den Verriegelungskörpern 32 in Verbindung steht.

In der Figur 21 ist die stabile und spielfreie Arretierung des Kugelgelenks 20 in seiner Verriegelungsstellung veranschaulicht. Bei einer Bewegung des Betätigungselements 28 in einer Betätigungsrichtung a, also in Figur 19 nach oben, beaufschlagt das Betätigungselement 28 die Verriegelungskörper 32 über die Zwischenelemente 40 radial nach außen und presst in der Verriegelungsstellung die Verriegelungskörper 32 in die Verriegelungstaschen 34 des Gelenkgehäuses 26. Schließen die Längsrichtungen x der Kanäle 30 einen Winkel ϕ≠180° ein, so entsteht durch diese Radialbeaufschlagung eine resultierende Kraft R, die auf der Winkelhalbierenden y des Winkels ϕ liegt und radial nach außen gerichtet ist. Das Betätigungselement 28 ist in einer Ausnehmung 76 des Kugelkopfes 24 verschieblich geführt und wird durch die resultierende Kraft R radial gegen den Rand dieser Ausnehmung 76 gepresst. Folglich stützt sich das Betätigungselement 28 am Kugelkopf 24 und dieser wiederum am Gelenkgehäuse 26 ab, wobei eine Oberfläche des Kugelkopfes 24 im Bereich eines Schnittpunkts mit der Winkelhalbierenden y des Winkels ϕ eine Kontaktstelle Y mit dem Gelenkgehäuse 26 ausbildet. Somit ergibt sich in der Verriegelungsstellung des Kugelgelenks 20 eine stabile und spielfreie 3-Punkt-Abstützung mit einer 2-Punkt-Verriegelung zwischen Kugelkopf 24 und Gelenkgehäuse 26.

Um etwaige Herstellungstoleranzen besonders gut ausgleichen zu können, sind die Zwischenelemente 40 vorzugsweise elastisch verformbar. Aufgrund ihres Herstellungsmaterials und/oder ihrer Geometrie sind die Zwischenelemente 40 elastischer, insbesondere wenigstens um einen Faktor 2 elastischer als die Verriegelungskörper 32. Das bedeutet, dass das Zwischenelement 40 bei Aufbringen einer Kraft in x-Richtung pro Längeneinheit doppelt so weit elastisch nachgibt als der Verriegelungskörper 32. Alternativ nimmt die radiale Dicke des Zwischenelements 40 bei Aufbringen der gleichen Kraft auf den Verriegelungskörper 32 und das Zwischenelement 40 in Längsrichtung x um wenigstens den doppelten Betrag zu, den der Verriegelungskörper 32 zunimmt.

Hinsichtlich des Materials können die Zwischenelemente 40 beispielsweise aus einem Elastomer und die Verriegelungskörper 32 aus Stahl gefertigt sein. Hinsichtlich ihrer geometrischen Form können die Zwischenelemente 40 als Kugeln, als Spreizkörper (vgl. Figur 6) oder als langgestreckte zylindrische Körper mit abgerundeten Enden ausgebildet sein.

Bei der Ausführung als Spreizkörper sind die Zwischenelemente 40 geschlitzt und quer zur Längsrichtung x des Kanals 30 elastisch aufspreizbar. Die Verriegelungskörper 32 sind vorzugsweise kugelförmig, können aber alternativ auch langgestreckte zylindrische Körper mit abgerundeten Enden sein.

In einer besonders kostengünstigen Ausführungsform sind alle Zwischenelemente 40 und Verriegelungskörper 32 identisch ausgebildet, vorzugsweise als Kugeln, insbesondere Stahlkugeln. Hierbei wird davon ausgegangen, dass sich das Betätigungselement 28 quer zur Betätigungsrichtung a zumindest geringfügig in der Ausnehmung 76 bewegen kann, so dass über einen Selbstzentrierungseffekt der 3-Punkt-Abstützung eine weitgehend spielfreie Verriegelung der Kupplungsbaugruppe 12 gewährleistet ist.

Um eine Verriegelungsstellung bei verschiedenen Drehwinkeln zu erlauben, kann der Verriegelungskörper auch mehr als zwei Verriegelungstaschen 34 aufweisen, z. B. weitere Verriegelungstaschen 34 gegenüberliegend zu den beiden in Figur 21 belegten Verriegelungstaschen 34 (siehe unterbrochene Linie).

Die Figur 22 zeigt ein Ende des Betätigungselements 28 in zwei perspektivischen Detailansichten. Das Betätigungselement 28 weist eine Längsachse A und im Bereich einer Anlagefläche 78 für die Verriegelungskörper 32 oder die Zwischenelemente 40 einen bezüglich der Längsachse A nicht-rotationssymmetrischen Querschnitt auf, um eine Relativdrehung zwischen dem Betätigungselement 28 und dem Gelenkzapfen 22 um die Längsachse A zu verhindern. Die Relativdrehung wird in der Nichtverriegelungsstellung durch einen axialen Fortsatz 80 des Betätigungselements 28 und in der Verriegelungsstellung durch Keilflächen 46 des Betätigungselements 28 unterbunden, wobei die Keilflächen 46 in der Betätigungsrichtung a keilförmig aufeinander zulaufen und sich in einer Ebene senkrecht zur Betätigungsrichtung a im wesentlichen tangential zu den kugelförmigen Zwischenelementen 40 erstrecken (Figur 21).

## Patentansprüche

1. Verriegelungsmechanismus umfassend
ein Kugelgelenk (20), das aus einem Gelenkzapfen (22) mit einem Kugelkopf (24) und einem Gelenkgehäuse (26), das den Kugelkopf (24) aufnimmt, gebildet ist,
ein in dem Kugelkopf (24) vorgesehenes Betätigungselement (28), das in einer Betätigungsrichtung (a) verschiebbar ist, und
genau zwei durch das Betätigungselement (28) beaufschlagbare Verriegelungskörper (32), die jeweils in einem seitlichen Kanal (30) des Kugelkopfes (24) aufgenommen und in Längsrichtung (x) des jeweiligen Kanals (30) verschieblich geführt sind,
wobei jeder Verriegelungskörper (32) in einer Verriegelungsstellung des Kugelgelenks (20) in eine Verriegelungstasche (34) des Gelenkgehäuses (26) eingreift, um das Kugelgelenk (20) zu arretieren, und
wobei die Längsrichtungen (x) der beiden Kanäle (30) einen Winkel (ϕ) von 0°<ϕ<180° einschließen,
**dadurch gekennzeichnet, dass** in jedem Kanal (30) ein Zwischenelement (40) vorgesehen und in Längsrichtung des Kanals (30) geführt ist, wobei das Betätigungselement (28) jeweils über die Zwischenelemente (40) mit den Verriegelungskörpern (32) in Verbindung steht, und
wobei die Zwischenelemente (40) elastischer als die Verriegelungskörper (32) sind.

2. Verriegelungsmechanismus nach Anspruch 1, **dadurch gekennzeichnet, dass** die Längsrichtungen (x) der beiden Kanäle (30) einen Winkel (ϕ) von 90°<ϕ<180°, bevorzugt von etwa 120° einschließen.

3. Verriegelungsmechanismus nach Anspruch 1 oder 2, **dadurch gekennzeichnet, dass** in der Verriegelungsstellung des Kugelgelenks (20) ein Abschnitt der Oberfläche des Kugelkopfes (24), vorzugsweise im Bereich der Winkelhalbierenden (y) des Winkels (ϕ), den die Kanäle (30) einschließen, eine Kontaktstelle (Y) mit dem Gelenkgehäuse (26) hat.

4. Verriegelungsmechanismus nach einem der vorhergehenden Ansprüche, **dadurch gekennzeichnet, dass** die Zwischenelemente (40) geschlitzt und quer zur Längsrichtung (x) des Kanals (30) elastisch aufspreizbar sind.

5. Verriegelungsmechanismus nach einem der vorhergehenden Ansprüche, **dadurch gekennzeichnet, dass** das Betätigungselement (28) eine Längsachse (A) und im Bereich einer Anlagefläche für die Verriegelungskörper (32) oder die Zwischenelemente (40) einen bezüglich der Längsachse (A) nicht-rotationssymmetrischen Querschnitt aufweist, um eine Relativdrehung zwischen dem Betätigungselement (28) und dem Gelenkzapfen (22) um die Längsachse (A) zu verhindern.

6. Fahrzeugseitige Kupplungsbaugruppe einer Anhängerkupplung für Fahrzeuge, umfassend
ein fahrzeugfestes Halteteil (14),
einen Kupplungsarm (16), der an einem freien Ende ein Kopplungselement (18) zum lösbaren Befestigen eines Anhängers aufweist,
einen Verriegelungsmechanismus nach einem der Ansprüche 1 bis 5,
wobei das Halteteil (14) und der Kupplungsarm (16) durch das Kugelgelenk (20) schwenkbar verbunden sind und die Verriegelungsstellung des Kugelgelenks (20) einer Verriegelungsstellung der Kupplungsbaugruppe (12) entspricht, in welcher der Kupplungsarm (16) bezüglich des Halteteils (14) arretiert ist,
wobei in jedem Kanal (30) ein Zwischenelement (40) vorgesehen und in Längsrichtung des Kanals (30) geführt ist, und
wobei das Betätigungselement (28) jeweils über die Zwischenelemente (40) mit den Verriegelungskörpern (32) in Verbindung steht.

7. Fahrzeugseitige Kupplungsbaugruppe einer Anhängerkupplung für Fahrzeuge, umfassend
ein fahrzeugfestes Halteteil (14),
einen Kupplungsarm (16), der an einem freien Ende ein Kopplungselement (18) zum lösbaren Befestigen eines Anhängers aufweist,
ein Kugelgelenk (20), das aus einem Gelenkzapfen (22) mit einem Kugelkopf (24) und einem Gelenkgehäuse (26), das den Kugelkopf (24) aufnimmt, gebildet ist, wobei das Halteteil (14) und der Kupplungsarm (16) durch das Kugelgelenk (20) schwenkbar verbunden sind,
ein in dem Kugelkopf (24) vorgesehenes Betätigungselement (28) und zumindest einen in einem seitlichen Kanal (30) des Kugelkopfes (24) geführten Verriegelungskörper (32), der in einer Verriegelungsstellung der Kupplungsbaugruppe (12) in eine Verriegelungstasche (34) des Gelenkgehäuses (26) eingreift, um den Kupplungsarm (16) bezüglich des Halteteils (14) zu arretieren,
**dadurch gekennzeichnet, daß** das Betätigungselement (28) mit dem Verriegelungskörper (32) über ein Zwischenelement (40) in Verbindung steht, welches in dem Kanal (30) geführt und in der Verriegelungsstellung der Kupplungsbaugruppe (12) in Längsrichtung (x) des Kanals (30) und/oder quer zur Längsrichtung (x) des Kanals (30) elastisch verformt ist.

8. Kupplungsbaugruppe nach Anspruch 6 oder 7, **dadurch gekennzeichnet, dass** das Zwischenelement (40) in der Verriegelungsstellung der Kupplungsbaugruppe, verglichen mit einer Nichtverriegelungsstellung, in Längsrichtung (x) des Kanals (30) komprimiert und quer dazu so aufgeweitet ist, dass es gegen eine Kanalwand (42) gedrückt wird.

9. Kupplungsbaugruppe nach einem der Ansprüche 6 bis 8, **dadurch gekennzeichnet, dass** das Zwischenelement (40) auf einer dem Verriegelungskörper (32) zugewandten Stirnseite eine Vertiefung (48) aufweist.

10. Kupplungsbaugruppe nach Anspruch 9, **dadurch gekennzeichnet, dass** der Verriegelungskörper (32) in der Verriegelungsstellung zumindest teilweise in die Vertiefung (48) hineinragt.

11. Kupplungsbaugruppe nach einem der Ansprüche 6 bis 10, **dadurch gekennzeichnet, dass** das Betätigungselement (28) durch eine durch einen hohlen Gelenkschaft (44) des Gelenkzapfens (22) in den Kugelkopf (24) ragende Stange ausgebildet ist, die eine Konus- oder Keilfläche (46) aufweist und mit dem Zwischenelement (40) in Kontaktanlage steht.

12. Kupplungsbaugruppe nach einem der Ansprüche 6 bis 11, **dadurch gekennzeichnet, dass** das Gelenkgehäuse (26) relativ zum Gelenkzapfen (22) geführt ist, so dass das Gelenkgehäuse (26) beim Verschwenken relativ zum Gelenkzapfen (22) einer vorgegebenen, insbesondere gekrümmten Bahnkurve folgt.

13. Kupplungsbaugruppe nach Anspruch 12, **dadurch gekennzeichnet, dass** am Kugelkopf (24) des Gelenkzapfens (22) ein Führungsvorsprung (60) und im Gelenkgehäuse (26) eine Führungskulisse (62) ausgebildet ist, wobei der Führungsvorsprung (60) in die Führungskulisse (62) eingreift, und wobei die Führungskulisse (62) vorzugsweise in einer Einsatzhülse (64) ausgebildet ist, die in einen Gehäuserohling einsetzbar ist und zusammen mit dem Gehäuserohling das Gelenkgehäuse (26) bildet.

14. Kupplungsbaugruppe nach Anspruch 12, **dadurch gekennzeichnet, dass** die Bahnkurve durch einen mit dem Gelenkgehäuse (26) verbundenen ersten Kopplungsring (66), einen mit dem Gelenkzapfen (22) verbundenen zweiten Kopplungsring (68), sowie Führungselemente (72) zwischen den Kopplungsringen (66, 68) definiert ist, wobei vorzugsweise wenigstens ein Kopplungsring (66, 68) nicht eben ist.

## Claims

1. A locking mechanism, comprising
a ball joint (20) which is formed from a joint pin (22) having a ball head (24) and a joint housing (26) receiving the ball head (24),
an actuating element (28) which is provided in the ball head (24) and which is displaceable in an actuating direction (a), and
exactly two locking bodies (32) which can be acted upon by the actuating element (28), which are each received in a side channel (30) of the ball head (24), and which are displaceably guided in the longitudinal direction (x) of the respective channel (30),
each locking body (32) engaging a locking pocket (34) of the joint housing (26) in the locking position of the ball joint (20) for arresting the ball joint (20), and
the longitudinal directions (x) of the two channels (30) enclosing an angle (ϕ) of 0° < ϕ < 180°,
**characterized in that** an intermediate element (40) is provided in each channel (30) and guided in the longitudinal direction of the channel (30), the actuating element (28) being respectively connected with the locking bodies (32) via the intermediate elements (40), and
the intermediate elements (40) being more elastic than the locking bodies (32).

2. The locking mechanism according to claim 1, **characterized in that** the longitudinal directions (x) of the two channels (30) enclose an angle (ϕ) of 90° < ϕ < 180°, preferably of about 120°.

3. The locking mechanism according to claim 1 or 2, **characterized in that** in the locking position of the ball joint (20), a portion of the surface of the ball head (24), preferably in the region of the bisecting line (y) of the angle (ϕ) enclosed by the channels (30), has a contacting point (Y) with the joint housing (26).

4. The locking mechanism according to any of the preceding claims, **characterized in that** the intermediate elements (40) are slotted and are elastically expandable transversely to the longitudinal direction (x) of the channel (30).

5. The locking mechanism according to any of the preceding claims, **characterized in that** the actuating element (28) has a longitudinal axis (A) and in the region of a contact surface for the locking bodies (32) or the intermediate elements (40) a non-rotationally symmetrical cross-section with respect to the longitudinal axis (A) to prevent a relative rotation between the actuating element (28) and the joint pin (22) about the longitudinal axis (A).

6. A vehicle-side coupling assembly of a trailer coupling for vehicles, comprising
a vehicle-fixed retaining part (14),
a coupling arm (16) having at a free end a linking element (18) for detachably securing a trailer,
a locking mechanism according to any of claims 1 to 5,
the retaining part (14) and the coupling arm (16) being pivotally connected by the ball joint (20), and the locking position of the ball joint (20) corresponding to a locking position of the coupling assembly (12) in which the coupling arm (16) is arrested with respect to the retaining part (14),
an intermediate element (40) being provided in each channel (30) and being guided in the longitudinal direction of the channel (30), and
the actuating element (28) being respectively connected with the locking bodies (32) via the intermediate elements (40).

7. A vehicle-side coupling assembly of a trailer coupling for vehicles, comprising
a vehicle-fixed retaining part (14),
a coupling arm (16) having at a free end a linking element (18) for detachably securing a trailer,
a ball joint (20) which is formed from a joint pin (22) having a ball head (24) and a joint housing (26) receiving the ball head (24), the retaining part (14) and the coupling arm (16) being pivotally connected via the ball joint (20),
an actuating element (28) provided in the ball head (24) and at least one locking body (32) which is guided in a side channel (30) of the ball head (24) and engages a locking pocket (34) of the joint housing (26) in a locking position of the coupling assembly (12) for arresting the coupling arm (16) with respect to the retaining part (14),
**characterized in that** the actuating element (28) is connected with the locking body (32) via an intermediate element (40) which is guided in the channel (30) and which in the locking position of the coupling assembly (12) is elastically deformed in the longitudinal direction (x) of the channel (30) and/or transversely to the longitudinal direction (x) of the channel (30).

8. The coupling assembly according to claim 6 or 7, **characterized in that** in the locking position of the coupling assembly, the intermediate element (40), compared with a non-locking position, is compressed in the longitudinal direction (x) of the channel (30) and is widened transversely thereto so as to be pressed against a channel wall (42).

9. The coupling assembly according to any of claims 6 to 8, **characterized in that** the intermediate element (40) presents a recess (48) on an end face facing the locking body (32).

10. The coupling assembly according to claim 9, **characterized in that** in the locking position, the locking body (32) projects at least partially into the recess (48).

11. The coupling assembly according to any of claims 6 to 10, **characterized in that** the actuating element (28) is formed by a rod projecting through a hollow joint shank (44) of the joint pin (22) and into the ball head (24), the rod comprising a cone or wedge face (46) and being in contacting abutment with the intermediate element (40).

12. The coupling assembly according to any of claims 6 to 11, **characterized in that** the joint housing (26) is guided relative to the joint pin (22) so that the joint housing (26) follows a predetermined, particularly curved trajectory upon pivotal movement relative to the joint pin (22).

13. The coupling assembly according to claim 12, **characterized in that** a guiding projection (60) is formed on the ball head (24) of the joint pin (22), and **in that** a slotted guide (62) is formed in the joint housing (26), the guiding projection (60) engaging the slotted guide (62), and the slotted guide (62) being preferably formed in an insertion sleeve (64) which is adapted to be inserted into a housing blank and forms the joint housing (26) along with the housing blank.

14. The coupling assembly according to claim 12, **characterized in that** the trajectory is defined by a first linking ring (66) connected with the joint housing (26), by a second linking ring (68) connected with the joint pin (22), and by guiding elements (72) between the linking rings (66, 68), at least one linking ring (66, 68) being preferably non-planar.

## Revendications

1. Mécanisme de verrouillage, comportant
une articulation sphérique (20) qui est formée à partir d'un tourillon d'articulation (22) présentant une tête sphérique (24), et d'un boîtier d'articulation (26) recevant la tête sphérique (24),
un élément d'actionnement (28) qui est prévu dans la tête sphérique (24) et qui est déplaçable selon une direction d'actionnement (a), et
exactement deux corps de verrouillage (32) qui sont aptes à être sollicités par l'élément d'actionnement (28), qui sont chacun reçus dans un canal latéral (30) de la tête sphérique (24), et qui sont guidés de manière déplaçable selon la direction longitudinale (x) du canal respectif (30),
chaque corps de verrouillage (32) s'engageant dans une poche de verrouillage (34) du boîtier d'articulation (26) dans une position de verrouillage de l'articulation sphérique (20) pour arrêter l'articulation sphérique (20), et
les directions longitudinales (x) des deux canaux (30) renfermant un angle (ϕ) de 0° < ϕ < 180°,
**caractérisé en ce qu'**un élément intermédiaire (40) est prévu dans chaque canal (30) et est guidé selon la direction longitudinale du canal (30), l'élément d'actionnement (28) étant respectivement relié aux corps de verrouillage (32) par les éléments intermédiaires (40), et
les éléments intermédiaires (40) étant plus élastiques que les corps de verrouillage (32).

2. Mécanisme de verrouillage selon la revendication 1, **caractérisé en ce que** les directions longitudinales (x) des deux canaux (30) renferment un angle (ϕ) de 90°< ϕ < 180°, de préférence d'environ 120°.

3. Mécanisme de verrouillage selon la revendication 1 ou 2, **caractérisé en ce que** dans la position de verrouillage de l'articulation sphérique (20), un tronçon de la surface de la tête sphérique (24), de préférence dans la zone de la bissectrice (y) de l'angle (ϕ) que les canaux (30) renferment, présente un point de contact (Y) avec le boîtier d'articulation (26).

4. Mécanisme de verrouillage selon l'une des revendications précédentes, **caractérisé en ce que** les éléments intermédiaires (40) sont fendus et sont aptes à être élastiquement écartés transversalement à la direction longitudinale (x) du canal (30).

5. Mécanisme de verrouillage selon l'une des revendications précédentes, **caractérisé en ce que** l'élément d'actionnement (28) présente un axe longitudinal (A) et dans la zone d'une surface d'appui pour les corps de verrouillage (32) ou les éléments intermédiaires (40) une section transversale qui n'est pas à symétrie de révolution par rapport à l'axe longitudinal (A), pour empêcher une rotation relative entre l'élément d'actionnement (28) et le tourillon d'articulation (22) autour de l'axe longitudinal (A).

6. Ensemble d'accouplement côté véhicule d'un attelage de remorque pour véhicules, comportant
une pièce de retenue (14) solidaire au véhicule,
un bras d'accouplement (16) qui présente à une extrémité libre un élément de couplage (18) pour une fixation détachable d'une remorque,
un mécanisme de verrouillage selon l'une des revendications 1 à 5,
la pièce de retenue (14) et le bras d'accouplement (16) étant reliés à pivotement par l'articulation sphérique (20), et la position de verrouillage de l'articulation sphérique (20) correspondant à une position de verrouillage de l'ensemble d'accouplement (12) dans laquelle le bras d'accouplement (16) est arrêté par rapport à la pièce de retenue (14),
un élément intermédiaire (40) étant prévu dans chaque canal (30) et étant guidé selon la direction longitudinale du canal (30), et
l'élément d'actionnement (28) étant respectivement relié aux corps de verrouillage (32) par les éléments intermédiaires (40).

7. Ensemble d'accouplement côté véhicule d'un attelage de remorque pour véhicules, comportant
une pièce de retenue (14) solidaire au véhicule,
un bras d'accouplement (16) qui présente à une extrémité libre un élément de couplage (18) pour la fixation détachable d'une remorque,
une articulation sphérique (20) qui est formée à partir d'un tourillon d'articulation (22) présentant une tête sphérique (24), et d'un boîtier d'articulation (26) recevant la tête sphérique (24), la pièce de retenue (14) et le bras d'accouplement (16) étant reliés à pivotement par l'articulation sphérique (20),
un élément d'actionnement (28) qui est prévu dans la tête sphérique (24) et au moins un corps de verrouillage (32) qui est guidé dans un canal latéral (30) de la tête sphérique (24) et qui s'engage dans une poche de verrouillage (34) du boîtier d'articulation (26) dans une position de verrouillage de l'ensemble d'accouplement (12) pour arrêter le bras d'accouplement (16) par rapport à la pièce de retenue (14),
**caractérisé en ce que** l'élément d'actionnement (28) est relié au corps de verrouillage (32) par un élément intermédiaire (40) qui est guidé dans le canal (30) et qui est élastiquement déformé selon la direction longitudinale (x) du canal (30) et/ou transversalement à la direction longitudinale (x) du canal (30) dans la position de verrouillage de l'ensemble d'accouplement (12).

8. Ensemble d'accouplement selon la revendication 6 ou 7, **caractérisé en ce que** dans la position de verrouillage de l'ensemble d'accouplement, l'élément intermédiaire (40), comparé à une position non verrouillée, est comprimé dans la direction longitudinale (x) du canal (30) et est évasé transversalement à celle-ci de manière à être pressé contre une paroi de canal (42).

9. Ensemble d'accouplement selon l'une des revendications 6 à 8, **caractérisé en ce que** sur une face frontale tournée vers le corps de verrouillage (32), l'élément intermédiaire (40) présente un évidement (48).

10. Ensemble d'accouplement selon la revendication 9, **caractérisé en ce que** dans la position de verrouillage, le corps de verrouillage (32) fait saillie au moins partiellement dans l'évidement (48).

11. Ensemble d'accouplement selon l'une des revendications 6 à 10, **caractérisé en ce que** l'élément d'actionnement (28) est réalisé par une barre faisant saillie à travers une tige d'articulation (44) creuse du tourillon d'articulation (22) et dans la tête sphérique (24), la barre présentant une surface conique ou cunéiforme (46) et étant en appui de contact avec l'élément intermédiaire (40).

12. Ensemble d'accouplement selon l'une des revendications 6 à 11, **caractérisé en ce que** le boîtier d'articulation (26) est guidé par rapport au tourillon d'articulation (22) de sorte que le boîtier d'articulation (26) suit une trajectoire prédéterminée en particulier courbe lors du pivotement par rapport au tourillon d'articulation (22).

13. Ensemble d'accouplement selon la revendication 12, **caractérisé en ce qu'**une saillie de guidage (60) est réalisée sur la tête sphérique (24) du tourillon d'articulation (22) et une coulisse de guidage (62) est réalisée dans le boîtier d'articulation (26), la saillie de guidage (60) s'engageant dans la coulisse de guidage (62), et la coulisse de guidage (62) étant réalisée de préférence dans une douille d'insertion (64) qui est apte à être insérée dans une ébauche de boîtier et qui forme ensemble avec l'ébauche de boîtier le boîtier d'articulation (26).

14. Ensemble d'accouplement selon la revendication 12, **caractérisé en ce que** la trajectoire est définie par un premier anneau de couplage (66) relié au boîtier d'articulation (26), par un deuxième anneau de couplage (68) relié au tourillon d'articulation (22), et par des éléments de guidage (72) entre les anneaux de couplage (66, 68), au moins un anneau de couplage (66, 68) étant de préférence non plat.
